# EUROPEAN PATENT APPLICATION

(11) **EP 1 930 053 A2**
(43) Date of publication of application: **11.06.2008**
(21) Application number: 08153145.1
(22) Date of filing: 27.08.2003
(51) Int. Cl.: A63F 13/00, G06F 12/14, G06K 17/00

(54) **Game device and method for saving game data**

(30) Priority: 28.08.2002 JP 2002248695
(62) Divisional of application: 03255300.0
(71) Applicant: Konami Digital Entertainment Co., Ltd., Tokyo 107-8324 (JP)
(72) Inventor: Uchiyama, Satoshi, Tokyo 100-6330 (JP); Hirota, Ryuhei, Tokyo 100-6330 (JP)
(74) Representative: Style, Kelda Camilla Karen

(57) **Abstract**

[Problem] To reliably reflect the game data of actually executed games in the game data stored on recording media, and prevent duplication of the game data by improper means as well as use of game data that have been saved by improper means.

[Solution] When starting a game, use of a recording medium is prohibited if an improper retrieval detection flag is recorded on the recording medium, and an improver retrieval detection flag is recorded on the recording medium and use of the recording medium is allowed if no improper retrieval detection flag is recorded on the recording medium. When saving the game data, storage of the game data on the recording medium is prohibited if no improper retrieval detection flag is recorded on the recording medium, and the game data are stored on the recording medium if no improper retrieval detection flag is recorded on the recording medium. Then terminating the game, the improper retrieval flag is cleared.

## Description

The present invention relates to game machines and methods for saving game data, and in particular to game machines and methods for saving game data configured to save game data to a magnetic card or other recording medium.

In games in which the player character undergoes changes as the game unfolds, as in rearing and development simulation games, by storing game data based on the results of playing the game on a magnetic card, IC card, memory card or other recording medium, one can continue the game at a later opportunity using the game data stored on the recording medium.

Also in games in which the match results of action-type games and sports simulation games are left as the player's personal record, the player character changes based on the match results, or the difficulty of the game reflects the game results, the game data may be stored similarly on a recording medium.

In games in which the game data are stored on a recording medium, a game machine unit is provided with a data input/output means with which data can be read from or written to a removable recording medium.

As an example of a data input/output means, a card reader/writer is conceivable, with which data can be read from or written to a magnetic card made by applying a magnetic powder to the rear side of a plastic card, for example. In this case, if game data are stored on the magnetic card inserted in the card reader/writer, then it is possible to read in the game data and continue the game with those game data. Moreover, the game data on the inserted magnetic card are overwritten when the player issues an instruction to save the game data, or when it has been judged by the game application that the time has come to save the game data.

If, while playing the game, the game results appear to be disadvantageous for the player, then it is conceivable that the player retrieves the recording medium, in order to not leave the game results on the recording medium. In this case, there is the risk that the game results are not accurately reflected and the fun of the game is severely reduced. In particular in games in which the game performance is published on a network or in which one battles a plurality of player opponents over a network, the actual game performance of each player is not reflected, and much of the game data will be game data that are kept by improper means.

Moreover, it is possible to duplicate recording media on which the same game data are stored by inserting the recording medium on which the game data has been stored into the game device, retrieving the recording medium and inserting a different recording medium before saving the game. For example, it is possible to obtain game data of a high level, without going through an extensive gaming process, by duplicating a recording medium storing game data or a character status with a preferable performance. Recording media on which the game data are duplicated in this manner receive high prices at internet auctions or the like, and an entire market for them has been created.

Embodiments of the present invention present a method for saving game data and a game device with which the results of a game that was actually played are accurately reflected in the game data stored on a recording medium, and with which duplication of the game data by improper means as well as utilization of game data that has been saved by improper means can be prevented.

According to a an aspect of the present invention there is provided a method for saving game data in a game device that executes a game with a game execution unit and stores game data based on a result of that game onto a removable recording medium that is placed in a data input/output unit includes executing, when starting the game, a step of reading data that have been stored in a predetermined region of a recording medium that has been placed in the data input/output unit, and determining whether those data are improper retrieval detection data or proper termination certification data, a step of prohibiting use of the recording medium if it is judged that the data that have been read are improper retrieval detection data, a step of overwriting the predetermined region of the recording medium with improver retrieval detection data and allowing use of the recording medium if it is judged that the data that have been read are proper termination certification data; executing, when saving the game data, a step of reading the data stored in the predetermined region of the recording medium placed in the data input/output unit and determining whether those data are improper retrieval detection data, a step of prohibiting storage of the game data on the recording medium if it is judged that the data that have been read are not improper retrieval detection data, a step of storing on the recording medium the game data based on a result from execution of the game with the game execution unit if it is judged that the data that have been read are improper retrieval detection data; and executing, when terminating the game, a step of overwriting the predetermined region on which the improper retrieval detection data have been stored on the recording medium with proper termination certification data.

With this configuration, proper termination certification data may be recorded in a predetermined region of recording media on which the game data have been saved properly, and improper retrieval data maybe recorded on a predetermined region of recording media that are improperly retrieved during the game. Consequently, by verifying the data in the predetermined region of the recording medium when starting the game or when saving the game data, it may be detected whether the recording medium has been improperly retrieved, unauthorized duplication of the game data maybe prevented, and the results of actual games maybe reflected in the game data stored on the recording medium.

There is provided a further aspect wherein the predetermined region of the recording medium is set to a storage region of a retrieval prevention flag, a state in which the retrieval prevention flag in that predetermined region is set is taken to be a state in which the improper retrieval detection data are stored, and a state in which the retrieval prevention flag in that predetermined region is not set is taken to be a state in which the proper termination certification data are stored; and including executing, at the beginning of the game, a step of verifying whether a retrieval prevention flag has been recorded on the recording medium placed in the data input/output unit; a step of prohibiting use of the recording medium if the retrieval prevention flag has been recorded on the recording medium; a step of recording the retrieval prevention flag on the recording medium and allowing use of the recording medium if the retrieval prevention flag has not been recorded on the recording medium; executing, when saving the game data, a step of verifying whether the retrieval prevention flag has been recorded on the recording medium placed in the data input/output unit; a step of prohibiting storage of the game data on the recording medium if the retrieval prevention flag has not been recorded on the recording medium; a step of storing on the recording medium the game data based on a result from execution of the game with the game execution unit if the retrieval prevention flag has been recorded on the recording medium; and executing, when terminating the game, a step of clearing the retrieval prevention flag recorded on the recording medium.

With this configuration, the recording medium placed in the data input/output unit maybe put to a state in which the retrieval prevention flag is recorded during the execution of the game, and if the recording medium is retrieved during the execution of the game, then the retrieval prevention flag may stay recorded. If a recording medium on which the retrieval prevention flag is recorded is placed in the data input/output unit when starting the game, then use of that recording medium maybe prohibited, and the game may not be started with the game data stored on it. And if the retrieval prevention flag is not recorded on the recording medium placed in the data input/output unit when storing the game data, then storage of the game data maybe prohibited, so that storage of the game data maybe prohibited when the recording medium inserted when starting the game is retrieved during the game and another recording medium is inserted.

There is provided a further aspect comprising executing a step of setting an ID storage region for storing an ID on the recording medium, and storing in a memory unit the ID stored in the ID storage region of the recording medium when starting the game; and executing, when saving the game data, a step of reading the ID stored on the recording medium placed in the data input/output unit and verifying whether that ID matches the ID stored in the memory unit; a step of prohibiting storage of the game data to the recording medium if the ID stored on the recording medium does not match the ID stored in the memory unit; and a step of allowing storage of the game data on the recording medium if the ID stored on the recording medium matches the ID stored in the memory unit.

With this configuration, when the recording medium that was inserted when starting the game maybe retrieved and another recording medium on which the flag is recorded maybe inserted, then this can be detected through the ID, writing of the game data maybe prevented, and improper duplication of game data can be prevented.

There is provided a further aspect comprising, when starting the game, a step of assigning an ID to the recording medium placed in the data input/output unit and storing this ID on the recording medium.

With this configuration, even when no unique ID is recorded on each recording medium, an ID maybe issued to the recording medium when the recording medium is placed in the data input/output unit, and saving of game data by improper unit maybe prevented.

There is provided a further aspect wherein the proper termination certification data are a predetermined identification code, and the improper retrieval detection data are a security code that is assigned to the recording medium when starting the game; the method comprising executing, when starting the game, a step of reading data stored in the predetermined region of the recording medium placed in the data input/output unit; a step of prohibiting use of the recording medium if the data that have been read in are not the predetermined identification code; a step of assigning the security code to the recording medium, overwriting the predetermined region of the recording medium with that security code and allowing use of the recording medium if the data that have been read are the predetermined identification code; executing, when saving the game data, a step of reading the data stored in the predetermined region of the recording medium placed in the data input/output unit; a step of prohibiting storage of the game data on the recording medium if the data that have been read from the recording medium are different from the security code that has been assigned when starting the game; a step of storing on the recording medium the game data based on a result from execution of the game with the game execution unit if the data that have been read from the recording medium match the security code that has been assigned when starting the game; and executing, when terminating the game, a step of overwriting the predetermined region on the recording medium with the predetermined identification code.

With this configuration, the recording medium placed in the data input/output unit when starting the game maybe used only if a predetermined identification code is stored on it. During execution of the game, an issued security code maybe stored by overwriting on the recording medium, and if the recording medium is retrieved during the execution of the game, then this recording medium may not be used again. The predetermined identification code may be overwritten on recording media on which the game data are saved properly, so that these recording media can be used to play the game.

According to another aspect of the present invention, a game device comprises a game execution unit for executing a game; a data input/output unit with which data can be read/written from/onto a removable recording medium that is placed in the data input/output unit; a medium usage restriction unit that, when starting the game, verifies whether a retrieval prevention flag has been recorded on the recording medium placed in the data input/output unit, allows usage of the recording medium if the retrieval prevention flag has not been recorded, and prohibits usage of the recording medium if the retrieval prevention flag has been recorded; a flag setting unit that records a retrieval prevention flag onto a recording medium whose usage has been allowed by the medium usage restriction unit; a data saving restriction unit that, when saving game data, verifies whether the retrieval prevention flag has been recorded on the recording medium placed in the data input/output unit, prohibits storage of game data on the recording medium if the retrieval prevention flag has not been recorded on the recording medium, and allows storage, on the recording medium, of game data based on a result from execution of the game with the game execution unit if the retrieval prevention flag has been recorded on the recording medium; and a flag cancellation unit that, when terminating the game, clears the retrieval prevention flag recorded on the recording medium.

With this configuration, when the recording medium placed in the data input/output unit is retrieved while playing the game, then the retrieval prevention flag may stay recorded. If a recording medium with recorded retrieval prevention flag is placed in the data input/output unit when starting the game, then usage of that recording medium maybe prohibited, and the game may not be started with the game data stored thereon. Furthermore, if no retrieval prevention flag is recorded on the recording medium placed in the data input/output unit when saving the game data, then storage of the game data maybe prohibited, so that saving of the game data maybe prohibited even if the recording medium that was inserted when starting the game is retrieved during the game and another recording medium is inserted.

There is provided a further aspect wherein an ID storage region for storing an ID is set in the recording medium; the game device further comprising a memory unit that can store the ID stored in the ID storage region of the recording medium; and an ID storage unit for storing the ID stored on the recording medium in the memory unit when starting the game; wherein the data saving restriction unit further comprises a function of, when saving the game data, reading the ID stored on the recording medium placed in the data input/output unit and verifying whether this ID matches the ID stored in the memory unit, prohibiting storage of the game data onto the recording medium if the ID stored on the recording medium does not match the ID stored in the memory unit, and allowing storage of the game data onto the recording medium if the ID stored on the recording medium matches the ID stored in the memory unit.

With this configuration, even if the recording medium that was inserted when starting the game is retrieved during the game and another recording medium is inserted, this maybe recognized from the ID, and improper duplication of game data maybe prevented.

There is provided a further aspect comprising ID assignment unit for assigning an ID to the recording medium placed in the data input/output unit when starting the game, and storing this ID on the recording medium.

With this configuration, even when no unique ID is recorded on each recording medium, an ID maybe issued to the recording medium when the recording medium is placed in the data input/output unit, and saving of game data by improper unit maybe prevented.

According to another aspect of the present invention, a game device comprises a game execution unit for executing a game; a data input/output unit with which data can be read/written from/onto a removable recording medium that is placed in the data input/output unit; a medium usage restriction unit that, when starting the game, reads data in a predetermined region of the recording medium placed in the data input/output unit, prohibits usage of the recording medium if the data that have been read are not a predetermined identification code, and, if the data that have been read from the recording medium are a predetermined identification code, assigns to the recording medium a security code different from the predetermined identification code, overwrites the predetermined region of the recording medium with that security code, and allows usage of the recording medium; a data saving restriction unit that, when saving game data, reads data in a predetermined region of the recording medium placed in the data input/output unit, prohibits storage of game data on the recording medium if the data read from the recording medium are different from the security code assigned when starting the game, and stores, on the recording medium, game data based on a result from execution of the game with the game execution unit if the data read from the recording medium match the security code assigned when starting the game; and a security code cancellation unit that, when terminating the game, overwrites the predetermined region of the recording medium with a predetermined identification code.

With this configuration, the recording medium placed in the data input/output unit when starting the game maybe used only if a predetermined identification code is stored on it. During execution of the game, an issued security code is stored by overwriting on the recording medium, and if the recording medium is retrieved during the execution of the game, then this recording medium may not be used again. The predetermined identification code may be overwritten on recording media on which the game data are saved properly, so that these recording media may be used to play the game.

According to another aspect of the present invention, a method for saving game data in a game device that executes a game with a game execution unit and stores game data based on a result of that game onto a removable recording medium that is placed in a data input/output unit comprises, when starting the game, a step of overwriting the game data stored on the recording medium with game data based on a result that is at least as low as the lowest result that is conceivable when executing the game with the game execution unit; and a step of executing the game with the game execution unit and overwriting the game data stored on the recording medium with game data based on a result of that game.

Here, if the player is about to receive a disadvantageous result and retrieves the recording device, then game data based on a result that is at least as low as the lowest conceivable result maybe stored on that recording medium, and the original game data may not be reproduced.

There is provided a further aspect comprising executing a step of setting an ID storage region for storing an ID on the recording medium, and, when starting the game, storing in a memory unit the ID stored in the ID storage region of the recording medium; and executing, when saving the game data, a step of reading the ID stored in the recording medium placed in the data input/output unit and verifying whether this ID matches the ID stored in the memory unit; a step of prohibiting storage of the game data to the recording medium if the ID stored on the recording medium does not match the ID stored in the memory unit; a step of allowing storage of the game data on the recording medium if the ID stored on the recording medium matches the ID stored in the memory unit.

Here, even if the recording medium that was placed in the data input/output unit when starting the game is retrieved and another recording medium is inserted, this improper access at the time of saving the data maybe recognized by verifying the ID stored on the recording medium, and improper duplication of game data maybe prevented.

There is provided a further aspect comprising, when starting the game, executing a step of assigning an ID to the recording medium placed in the data input/output unit and storing this ID on the recording medium.

With this configuration, even when no unique ID is recorded on each recording medium, an ID may be issued to the recording medium when the recording medium is placed in the data input/output unit, and saving of game data by improper unit may be prevented.

According to another aspect of the present invention, a game device comprises a game execution unit for executing a game; a data input/output unit with which data can be read/written from/onto a removable recording medium that is placed in the data input/output unit; a retrieval prevention data storage unit that, when starting the game, overwrites game data stored on the recording medium with game data based on a result that is at least as low as the lowest result that is conceivable when executing the game with the game execution unit; and a proper data storage unit for executing the game with the game execution unit and overwriting the game data stored on the recording medium with game data based on a result of that game.

Here, if the player is about to receive a disadvantageous result and retrieves the recording device, then game data based on a result that is at least as low as the lowest conceivable result maybe stored on that recording medium, and the original game data may not be reproduced.

There is provided a further aspect, wherein an ID storage region for storing an ID is set in the recording medium; and the game device further comprises a memory unit that can store an ID stored on the recording medium; an ID storage unit for storing the ID stored on the recording medium in the memory unit when starting the game; and a data saving restriction unit that, when saving the game data, reads the ID stored on the recording medium placed in the data input/output unit, verifies whether this ID matches the ID stored in the memory unit, prohibits storage of the game data onto the recording medium if the ID stored on the recording medium does not match the ID stored in the memory unit, and allows storage of the game data onto the recording medium if the ID stored on the recording medium matches the ID stored in the memory unit.

Here, even if the recording medium that was placed in the data input/output unit when starting the game is retrieved and another recording medium is inserted, this improper access maybe recognized at the time of saving the data by verifying the ID stored on the recording medium, and improper duplication of game data maybe prevented.

There is provided a further aspect, comprising ID assignment unit for assigning an ID to the recording medium placed in the data input/output unit when starting the game, and storing this ID on the recording medium.

With this configuration, even when no unique ID is recorded on each recording medium, an ID may be issued to the recording medium when the recording medium is placed in the data input/output unit, and saving of game data by improper unit may be prevented.

Reference will now be made, by way of example, to the accompanying drawings, in which:
Fig. 1 is a control block diagram showing the overall configuration of a first embodiment;
Fig. 2 is a flowchart of a common operation;
Fig. 3 is a flowchart of the case that no data are recorded during the game;
Fig. 4 is a flowchart of the case that data are recorded during the game;
Fig. 5 is a flowchart of first embodiment;
Fig. 6 is a flowchart of second embodiment;
Fig. 7 is a flowchart of third embodiment;
Fig. 8 is a flowchart of fourth embodiment;
Fig. 9 is a flowchart of fifth embodiment;
Fig. 10 is a display of game screen;
Fig. 11 is a display of game screen;
Fig. 12 is a display of game screen;
Fig. 13 is a display of game screen;
Fig. 14 is a display of game screen;
Fig. 15 is a flowchart of soccer game;
Fig. 16 is a flowchart of soccer game.

Embodiments of the present invention will now be described with reference to the accompanying drawings.

### Overall Configuration

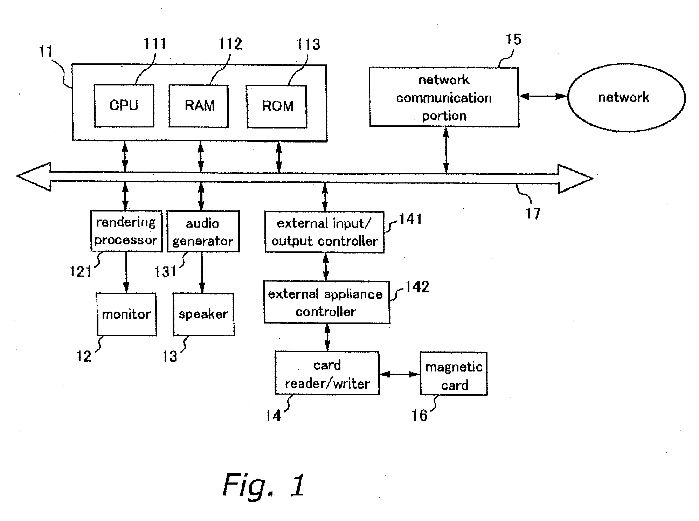

The game device according to an embodiment of the present invention may be a game machine for home use or an arcade game machine installed at a video-game arcade or the like, and the recording medium may be a magnetic card made of a thin sheet of plastic with a magnetic powder applied to its rear side, a memory card incorporating an EEPROM or a flash memory, or a magnetic disk, such as a flexible disk. In the following, it is assumed that the game machine is an arcade game, and the recording medium storing the game data is a magnetic card. Fig. 1 is a control block diagram showing the overall configuration thereof.

The game device includes a main board 11 on which are mounted a CPU 111, a RAM 112 and a ROM 113, a monitor 12 for displaying the game graphics, a rendering processor 121 for rending the game graphics on the monitor 12, a speaker for producing the game's sound effects or BGM, an audio generator 131 generating audio data to be enunciated by the speaker 13, a card reader/writer 14 in which a magnetic card 16 can be placed and with which data can be read/written from/to the magnetic card 16, an external appliance controller 142 for controlling the operation of the card reader/writer 14, an external input/output controller 141 for controlling the input/output with respect to the card reader/writer 14, and a network communication portion 15 connected to a network such as a LAN or the internet. The main board 11, the rendering processor 121, the audio generator 131, the external input/output controller 141 and the network communication portion 15 are connected to one another by a bus line 17.

### Basic Operation

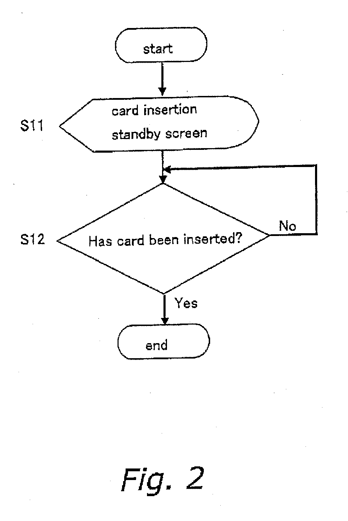

The basic operation of the game device is described with reference to Figs. 2 to 4.

### Card Insertion Acceptance Process

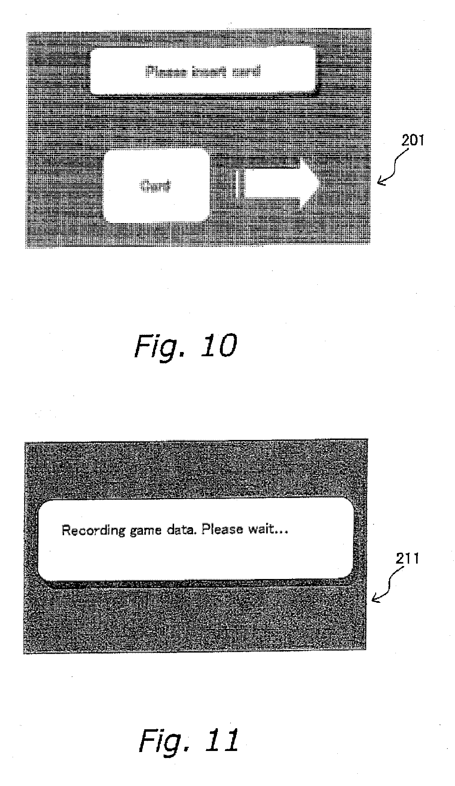

First, the card insertion acceptance process is described with reference to Fig. 2. When the power is turned on and the game is started, a card insertion standby screen is displayed on the monitor 12 at Step S 11. For example the card insertion standby screen 201 shown in Fig. 10 is displayed on the monitor 12. The card insertion standby screen 201 displays the message "please insert card," urging the player to insert a card.

At Step S12, it is determined whether a card has been inserted. If a magnetic card has been inserted into a predetermined insertion port, and the card has been placed in the card reader/writer 14, then it shifts to the next process from this routine.

### Case that Nothing is Recorded on the Magnetic Card During the Game

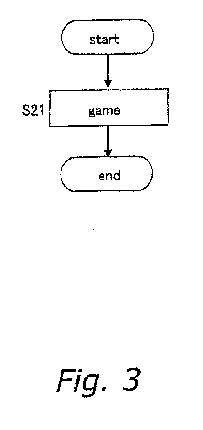

If nothing is recorded on the magnetic card during the game, then, the game is executed at Step S21, as shown in Fig. 3. The configuration may be such that when the game has finished, game data based on the game results are written onto the magnetic card, or it may be such that no game data are written onto the magnetic card.

### Case that Game data is Recorded on the Magnetic Card During the Game

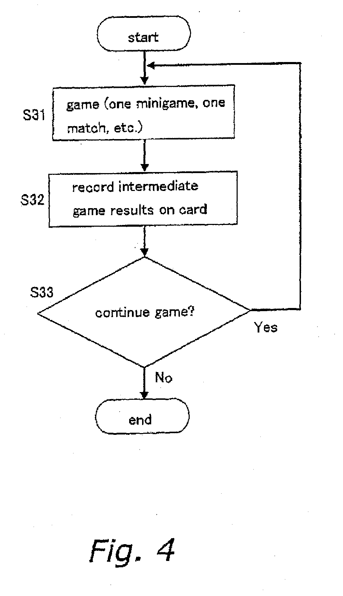

Fig. 4 is a flowchart of the case that game data is recorded on the magnetic card during the game.

At Step S31, one game cycle, within a plurality of stages or a plurality of matches, in which the game data can be saved is executed. For example, a game in which a plurality of mini-games are combined is configured such that it is possible to save the game data each time a mini-game ends, and one mini-game that is automatically selected by the application or one mini-game that is selected by the player is executed. In configurations in which a game continues through a predetermined number of matches or until a predetermined number of losses is reached, if game data can be saved for each match, then the first match is executed.

At Step S32, game data based on the results of the game executed at Step S31 are recorded on the magnetic card placed in the card reader/writer 14 as intermediate results.

At Step S33, it is determined whether the game should be continued. If the player gives an instruction to continue the game, then the procedure jumps to Step S31, and the game for the next stage or the next match is executed. Moreover, if the player has given an instruction not to continue the game or it is determined from the results of the game executed at Step S31 that the predetermined conditions for game over are met, then it is determined that the game is not continued, and the game is terminated.

### First Embodiment

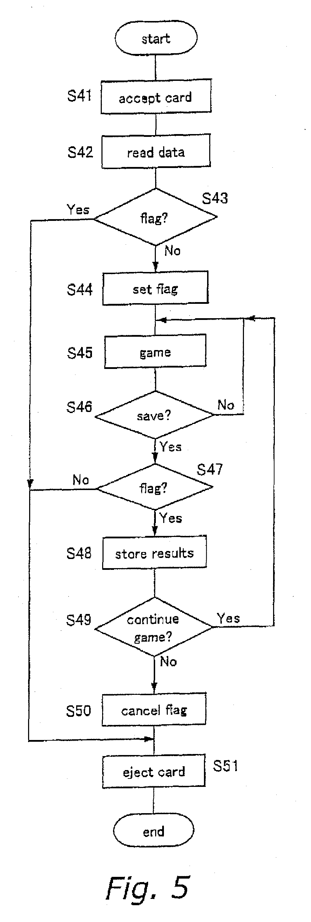

A game device according to a first embodiment of the present invention and its operation are described with reference to the flowchart in Fig. 5.

At Step S41, a card insertion acceptance process is carried out. Here, the card insertion acceptance process shown in Fig. 2 is carried out.

At Step S42, a process of reading data on the magnetic card 16 placed in the card reader/writer 14 is executed.

At Step S43, it is determined whether the data read from the magnetic card 16 include a retrieval prevention flag. Here, of the data read from the magnetic card 16, the data of a region in which the retrieval prevention flag is stored are verified, and it is determined whether a retrieval prevention flag has been recorded or not. If it is judged that a retrieval prevention flag has been recorded on the magnetic card 16 placed in the card reader/writer 14, then the procedure advances to Step S51, and a process of ejecting the inserted magnetic card 16 is executed. If it is determined at Step S43 that no retrieval prevention flag has been recorded on the magnetic card 16, then the procedure advances to Step S44.

At Step S44, a retrieval prevention flag is recorded on a predetermined region of the magnetic card 16 placed in the card reader/writer 14.

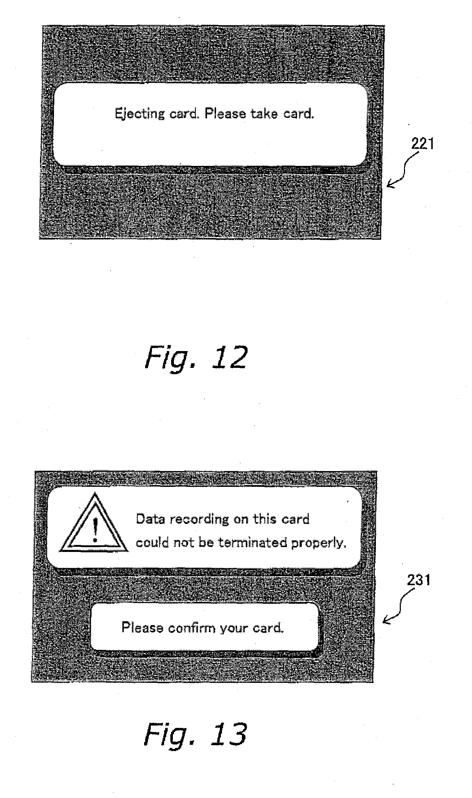

This retrieval prevention flag is recorded at a predetermined region of the inserted magnetic card 16 while the game is executed, and if the magnetic card 16 is improperly retrieved, then this retrieval prevention flag stays recorded. If a magnetic card 16 with such a recorded retrieval prevention flag is placed in the card reader/writer 14, then this is detected and the card is ejected. For example, an improper card ejection processing screen 231 as shown in Fig. 13 may be displayed, displaying such a message as "data recording on this card could not be terminated properly" or "please confirm your card" or the like, and at Step S51, the magnetic card 16 placed in the card reader/writer 14 is ejected.

At Step S45, a game selected by the player or a game automatically selected by the game device is executed.

At Step S46, it is determined whether the time has come to save the game data. As mentioned above, it is judged whether, within a game constituted by a plurality of stages or a plurality of matches, a game cycle at which the game data can be saved has been terminated, and if it is judged that it is time to save the game data, then the procedure advances to Step S47, and if not, then it advances to Step S45.

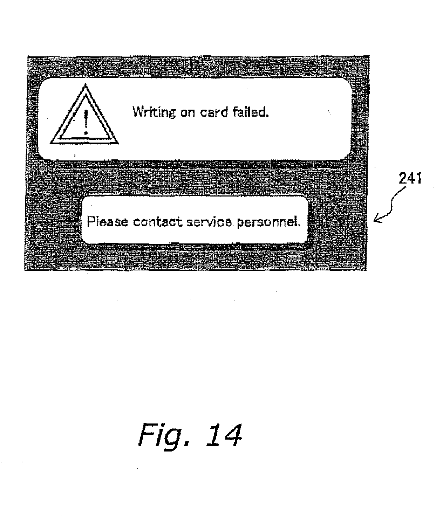

At Step S47, it is determined whether the retrieval prevention flag has been recorded at a predetermined region of the magnetic card 16 placed in the card reader/writer 14. If no retrieval prevention flag has been recorded at a predetermined region of the magnetic card 16, then the procedure advances to Step S51. In this case, as shown in Fig. 14, a write error screen 241 is displayed, displaying such a message as "writing on the card failed" or "please contact service personnel" or the like, and at Step S51 the magnetic card 16 inserted into the card reader/writer 14 is ejected.

If it is judged at Step S47 that the retrieval prevention flag has been recorded at the predetermined region of the magnetic card 16, then the procedure advances to Step S48.

At Step S48, the game data based on the results of the game executed at Step S45 are recorded on the magnetic card 16. Here, a game data recording screen 211 as shown in Fig. 11 is displayed, and the game data storage region on the magnetic card 16 is overwritten with new game data, while input by the player is prohibited.

At Step S49, it is determined whether to continue the game or not. If there is an instruction by the player to continue the game or if the procedure automatically advances to the next game, then the procedure advances to Step S45. And if the player has given an instruction to terminate the game, if a predetermined number of defeats have been reached, or if a game end condition has been reached, such as when the player has lost all his lives, then the procedure advances to Step S50.

At Step S50, the retrieval prevention flag recorded on the magnetic card 16 is cancelled. Here, the process of canceling the retrieval prevention flag is executed by resetting the data in the predetermined region of the magnetic card 16. After that, a card ejection processing screen 221 as shown in Fig. 12 is displayed, and the procedure advances to Step S51.

At Step S51, the magnetic card 16 is ejected from the card reader/writer 14.

With this first embodiment, a retrieval prevention flag is recorded on the magnetic card 16 placed in the card reader/writer 14 before the game is started, so that if the magnetic card is retrieved during the game, the retrieval prevention flag stays recorded. If a magnetic card 16 on which the retrieval prevention flag is still recorded is placed in the card reader/writer 14, use of the stored game data can be denied by ejecting this magnetic card 16. Consequently, if the player is about to face a disadvantageous game result and retrieves the magnetic card 16, then this magnetic card 16 cannot be used again.

Also, if the magnetic card that was inserted at the beginning of a game is retrieved and another magnetic card is inserted, then, even if it is a proper magnetic card, game data cannot be stored in it, since no retrieval prevention flag is recorded on it. Consequently, it is possible to prevent the unauthorized copying of game data.

It should be noted that in the case of a power outage while the game is played, the retrieval prevention flag stays recorded on the magnetic card 16 placed in the card reader/writer 14 at that time, and the game cannot be executed again using that magnetic card 16. Consequently, in order to cancel the retrieval prevention flag of such a magnetic card 16, it is conceivable to provide a flag cancellation means to be used by a game device administrator.

The flag cancellation means is realized as a flag cancellation application that is installed inside the game device such that it can be run only by the game device administrator. In this case, by running the flag cancellation application and executing a flag cancellation process after inserting the magnetic card 16 into the card reader/writer 14, the retrieval prevention flag recorded on a predetermined region of the magnetic card 16 can be cancelled.

It is also possible to compose the flag cancellation means as an independent device that is supplied only to the game device administrator.

### Second Embodiment

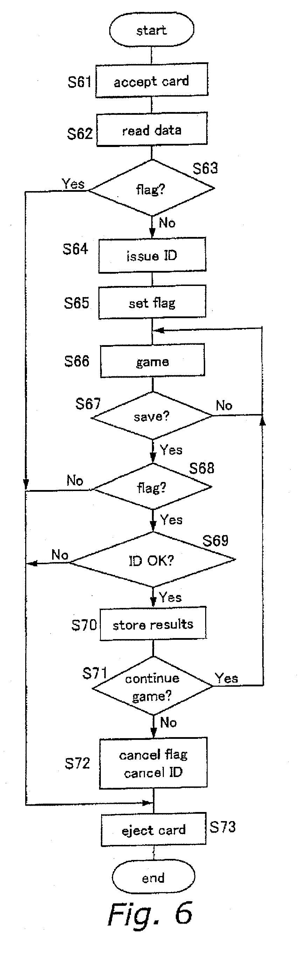

By assigning the magnetic card 16 an ID in addition to the retrieval prevention flag described for the first embodiment and recording this ID on the magnetic card 16, it is possible to prevent unauthorized copying of the game data even better. The operation of such a game device is described as the second embodiment, with reference to the flowchart in Fig. 6.

At Step S61, a card insertion acceptance process is carried out. Here, as in the first embodiment, the card insertion acceptance process shown in Fig. 2 is carried out.

At Step S62, a process of reading data on the magnetic card 16 placed in the card reader/writer 14 is executed.

At Step S63, it is determined whether the data read from the magnetic card 16 include a retrieval prevention flag. Here, of the data read from the magnetic card 16, the data of a region in which the retrieval prevention flag is stored are verified, and it is determined whether a retrieval prevention flag has been recorded or not. If it is judged that a retrieval prevention flag has been recorded on the magnetic card 16 placed in the card reader/writer 14, then the procedure advances to Step S73, and a process of ejecting the inserted magnetic card 16 is executed. As in the first embodiment, an improper card ejection processing screen 231 as shown in Fig. 13 is displayed, and at Step S73, the magnetic card 16 placed in the card reader/writer 14 is ejected.

At Step S63, if it is judged that the retrieval prevention flag has been recorded on the magnetic card 16, then the procedure advances to Step S64.

At Step S64, an ID is assigned to the magnetic card placed in the card reader/writer 14, and recorded on a predetermined region of the magnetic card 16. The assignment of the ID may be performed for example by generating a random number with a predetermined number of digits and assigning it as the ID. The ID assigned to the magnetic card 16 is stored at a predetermined region in the RAM 112 in Fig. 1.

At Step S65, the retrieval prevention flag is recorded on a predetermined region of the recording card 16 placed in the card reader/writer 14.

At Step S66, a game selected by the player or a game automatically selected by the game device is executed.

At Step S67, it is determined whether the time has come to save the game data. As in the first embodiment, it is judged whether, within a game constituted by a plurality of stages or a plurality of matches, a game cycle at which the game data can be saved has been terminated, and if it is judged that it is time to save the game data, then the procedure advances to Step S68, and if not, then it advances to Step S66.

At Step S68, it is determined whether the retrieval prevention flag has been recorded at a predetermined region of the magnetic card 16 placed in the card reader/writer 14. If no retrieval prevention flag has been recorded at a predetermined region of the magnetic card 16, then the procedure advances to Step S73. In this case, as in the first embodiment, a write error screen 241 as shown in Fig. 14 is displayed, and at Step S73 the magnetic card 16 placed in the card reader/writer 14 is ejected.

If it is judged at Step S68 that the retrieval prevention flag has been recorded at the predetermined region of the magnetic card 16, then the procedure advances to Step S69.

At Step S69, the ID is read from the magnetic card 16 placed in the card reader/writer 14, and compared with the ID stored in a predetermined region of the RAM 112. If it is judged that the ID recorded on the magnetic card 16 does not match the ID stored in the RAM 112, then the procedure advances to Step S73. In this case, a write error screen 241 as shown in Fig. 14 is displayed, and at Step S73, a process of ejecting the magnetic card 16 placed in the card reader/writer 14 is executed.

If it is judged at Step S69 that the ID recorded on the magnetic card 16 does match the ID stored in the RAM 112, then the procedure advances to Step S70.

At Step S70, the game data based on the results of the game executed at Step S67 are stored on the magnetic card 16. Here, the game data recording screen 211 as shown in Fig. 11 is displayed, and the game data storage region on the magnetic card 16 is overwritten with new game data, while input by the player is prohibited.

At Step S71, it is determined whether to continue the game or not. If there is an instruction by the player to continue the game or if the procedure automatically advances to the next game, then the procedure advances to Step S66. And if the player has given an instruction to terminate the game, if a predetermined number of defeats have been reached, or if a game end condition has been reached, such as when the player has lost all his lives, then the procedure advances to Step S72.

At Step S72, the retrieval prevention flag and the ID recorded on the magnetic card 16 are cancelled. Here, the process of canceling the retrieval prevention flag and the ID is executed by resetting the data in the predetermined region of the magnetic card 16. After that, a card ejection processing screen 221 as shown in Fig. 12 is displayed, and the procedure advances to Step S73.

At Step S73, the magnetic card 16 is ejected from the card reader/writer 14.

With this second embodiment, as in the first embodiment, if a magnetic card 16 on which the retrieval prevention flag is still recorded is placed in the card reader/writer 14, use of the stored game data can be denied by ejecting this magnetic card 16, so that if the player is about to face a disadvantageous game result and retrieves the magnetic card 16, then this magnetic card 16 cannot be used again.

Furthermore, if the magnetic card that was inserted originally is retrieved during the game and a magnetic card on which no retrieval prevention flag is recorded is inserted, then that magnetic card is ejected and it is not possible to save the game data. Moreover, also if instead of the magnetic card that was inserted originally a magnetic card is inserted on which a retrieval prevention flag has been recorded in some way, then storage of the game data on this magnetic card can be prevented, because the ID is verified when saving the game data

### Third Embodiment

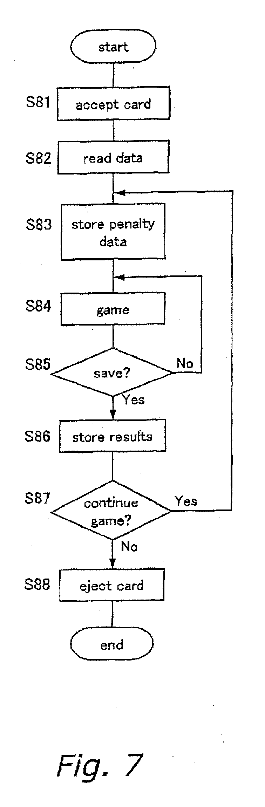

The following is a description of a third embodiment of the present invention, with reference to the flowchart in Fig. 7.

At Step S81, a card insertion acceptance process is carried out. Here, as in the first and second embodiment, the card insertion acceptance process shown in Fig. 2 is carried out.

At Step S82, a process of reading data on the magnetic card 16 placed in the card reader/writer 14 is executed.

At Step S83, game data based on the lowest result that is conceivable when playing the game with the game data stored on the magnetic card 16, or even a lower result than that, are stored as penalty data on the magnetic card 16. For example, if the game is such that one competes in a match resulting in victory or defeat, then the game data stored on the magnetic card 16 are overwritten with penalty data corresponding to game data for losing that match.

At Step S84, a game selected by the player or a game automatically selected by the game device is executed.

At Step S85, it is determined whether the time has come to save the game data. As in the first and the second embodiment, it is judged whether, within a game constituted by a plurality of stages or a plurality of matches, a game cycle at which the game data can be saved has been terminated, and if it is judged that it is time to save the game data, then the procedure advances to Step S86, and if not, then it advances to Step S84.

At Step S86, the game data based on the results of the game executed at Step S84 are recorded on the magnetic card 16. Here, a game data recording screen 211 as shown in Fig. 11 is displayed, and the game data storage region on the magnetic card 16 is overwritten with new game data, while input by the player is prohibited.

At Step S87, it is determined whether to continue the game or not. If there is an instruction by the player to continue the game or if the procedure automatically advances to the next game, then the procedure advances to Step S83. And if the player has given an instruction to terminate the game, if a predetermined number of defeats have been reached, or if a game end condition has been reached, such as when the player has lost all his lives, then the procedure advances to Step S88.

At Step S88, the magnetic card 16 is ejected from the card reader/writer 14.

With the third embodiment configured in this manner, the magnetic card 16 is overwritten with penalty data that is disadvantageous for the player at the beginning of the game, so that if the magnetic card 16 is retrieved during the game, the original game data cannot be restored. Thus, it can be prevented that the card is improperly retrieved, it can be prevented that the game results are not reflected, and also duplication of the game data can be prevented.

It should be noted that as a countermeasure allowing restitution in the case of power outages during the game, before writing the penalty data onto the magnetic card 16 at Step S83, it is conceivable to temporarily store the game data in the magnetic card 16 in a RAM 112 or other memory means. In this case, it is possible to restore the game data in the magnetic card using the game data that has been temporarily stored in the storage means. It is possible to implement the task of restoring the game data as an application installed within the game device, such that it can be performed only by the game device administrator. Moreover, it is also possible to temporarily write the game data into a region of the magnetic card 16 that cannot be accessed by ordinary users before writing penalty data onto the magnetic card, such that the restitution task can be performed by the game device administrator in the case of a power outage or the like. This restitution task can be realized with an application installed within the game device such that it can be performed only by the game device administrator, or it can be executed by a separate device supplied only to the game device administrator.

### Fourth Embodiment

In addition to storing on the magnetic card penalty data that is disadvantageous for the player, as in the third embodiment, it is possible to prevent improper retrieval by recording an ID on the magnetic card.

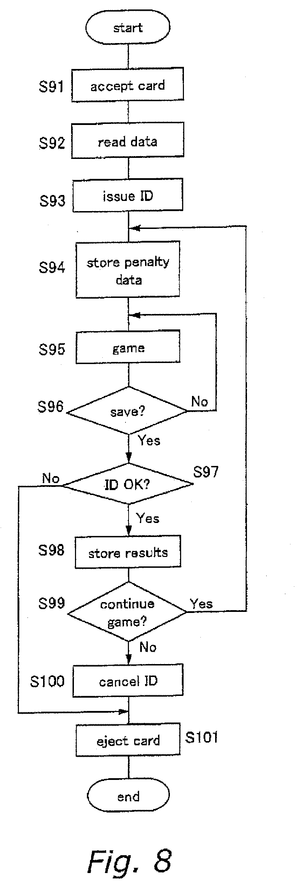

Such a game device is described as the fourth embodiment, based on the flowchart in Fig. 8.

At Step S91, a card insertion acceptance process is carried out. Here, as in the first embodiment, the card insertion acceptance process shown in Fig. 2 is carried out.

At Step S92, a process of reading data on the magnetic card 16 placed in the card reader/writer 14 is executed.

At Step S93, an ID is assigned to the magnetic card 16 placed in the card reader/writer 14, and recorded on a predetermined region of the magnetic card 16. The assignment of the ID may be performed for example by generating a random number with a predetermined number of digits and assigning it as the ID. The ID assigned to the magnetic card 16 is stored at a predetermined region in the RAM 112 in Fig. 1.

At Step S94, game data based on the lowest result that is conceivable when playing the game with the game data stored on the magnetic card 16, or even a lower result than that, are stored as penalty data on the magnetic card 16. For example, if the game is such that one competes in a match resulting in victory or defeat, then the game data stored on the magnetic card 16 are overwritten with penalty data corresponding to game data for losing that match.

At Step S95, a game selected by the player or a game automatically selected by the game device is executed.

At Step S96, it is determined whether the time has come to save the game data. As in the previous embodiments, it is judged whether, within a game constituted by a plurality of stages or a plurality of matches, a game cycle at which the game data can be saved has been terminated, and if it is judged that it is time to save the game data, then the procedure advances to Step S97, and if not, then it advances to Step S95.

At Step S97, the ID is read from the magnetic card 16 placed in the card reader/writer 14, and compared with the ID stored in a predetermined region of the RAM 112. If it is judged that the ID recorded on the magnetic card 16 does not match the ID stored in the RAM 112, then the procedure advances to Step S 101. In this case, a write error screen 241 as shown in Fig. 14 is displayed, and at Step S101, a process of ejecting the magnetic card 16 placed in the card reader/writer 14 is executed.

If it is judged at Step S97 that the ID recorded on the magnetic card 16 matches the ID stored in the RAM 112, then the procedure advances to Step S98.

At Step S98, the game data based on the results of the game executed at Step S95 are stored on the magnetic card 16. Here, the game data recording screen 211 as shown in Fig. 11 is displayed, and the game data storage region on the magnetic card 16 is overwritten with new game data, while input by the player is prohibited.

At Step S99, it is determined whether to continue the game or not. If there is an instruction by the player to continue the game or if the procedure automatically advances to the next game, then the procedure advances to Step S94. And if the player has given an instruction to terminate the game, if a predetermined number of defeats have been reached, or if a game end condition has been reached, such as when the player has lost all his lives, then the procedure advances to Step S100.

At Step S100, the ID recorded on the magnetic card 16 is cancelled. Here, the process of canceling the ID is executed by resetting the data in the predetermined region of the magnetic card 16. After that, a card ejection processing screen 221 as shown in Fig. 12 is displayed, and the procedure advances to Step S101.

At Step S101, the magnetic card 16 is ejected from the card reader/writer 14.

With the fourth embodiment, as in the third embodiment, if the magnetic card 16 is retrieved during the game, the original game data cannot be restored, and it is prevented that the game results are not reflected. Moreover, the effect of preventing duplication is further increased.

It should be noted that as a countermeasure for restitution in the case of power outages while playing the game, as in the third embodiment, it is conceivable to temporarily write the game data on the magnetic card 16 into a RAM 112 or other memory means or a region on the magnetic card 16 that cannot be accessed by ordinary users before writing penalty data onto the magnetic card at Step S94. The restitution can be performed by the game device administrator using the temporarily stored game data to restore the game data in the magnetic card 16.

### Fifth Embodiment

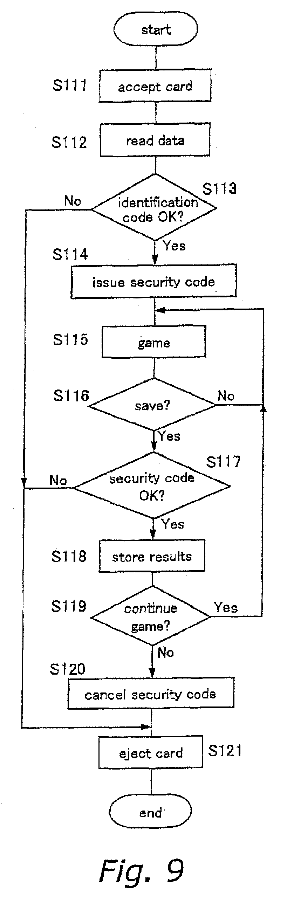

The following is a description of a fifth embodiment of the present invention, with reference to the flowchart in Fig. 9.

At Step S111, a card insertion acceptance process is carried out. Here, as in the previous embodiments, the card insertion acceptance process shown in Fig. 2 is carried out.

At Step S 112, a process of reading data on the magnetic card 16 placed in the card reader/writer 14 is executed.

At Step S 113, it is determined whether the data stored at a predetermined region of the magnetic card 16 placed in the card reader/writer 14 is a predetermined identification code. For example, if the data stored in the predetermined region of the magnetic card 16 is the predetermined identification code "0000," then it is judged that a regular magnetic card 16 has been inserted and the procedure advances to Step S114. If, on the other hand, the data stored in the predetermined region of the magnetic card 16 is not the predetermined identification code "0000," then it is judged that an improper magnetic card has been inserted and the procedure advances to Step S121. If it is judged that an improper magnetic card has been inserted, then an improper card ejection processing screen 231 as shown in Fig. 13 is displayed, and at Step S121, the magnetic card 16 placed in the card reader/writer 14 is ejected.

At Step S 114, a new security code is assigned to the magnetic card 16 inserted into the card reader/writer 14, and this new security code is recorded in a predetermined region of the magnetic card 16. Here, the assigned security code is a code different from the predetermined identification code, and if the predetermined identification code is "0000", as mentioned above for example, then a random number is generated, based on which a four-digit security code other than "0000" (for example "4225") is set, with which the region in which the predetermined identification code "0000" was stored is overwritten. The security code assigned to the magnetic card 16 is stored in a predetermined region of the RAM 112.

At Step S 115, a game selected by the player or a game automatically selected by the game device is executed.

At Step S 116, it is determined whether the time has come to save the game data. As in the previous embodiments, it is judged whether, within a game constituted by a plurality of stages or a plurality of matches, a game cycle at which the game data can be saved has been terminated, and if it is judged that it is time to save the game data, then the procedure advances to Step S 177, and if not, then it advances to Step S 155.

At Step S 117, the data stored in the predetermined region of the magnetic card 16 placed in the card reader/writer 14 is read in, and the security code stored in the predetermined region of the RAM 112 is looked up. If it is judged that the data stored in the predetermined region of the magnetic card 16 does not match the security code stored in the RAM 112, then the procedure advances to Step S 121. In this case, a write error screen 241 as shown in Fig. 14 is displayed, and at Step S121 the magnetic card 16 placed in the card reader/writer 14 is ejected.

If it is judged at Step S 117 that the data stored in the predetermined region of the magnetic card 16 matches the security code stored in the RAM 112, then the procedure advances to Step S118.

At Step S 118, the game data based on the results of the game executed at Step S 116 are stored on the magnetic card 16. Here, the game data recording screen 211 as shown in Fig. 11 is displayed, and the game data storage region on the magnetic card 16 is overwritten with new game data, while input by the player is prohibited.

At Step S 119, it is determined whether to continue the game or not. If there is an instruction by the player to continue the game or if the procedure automatically advances to the next game, then the procedure advances to Step S 115. And if the player has given an instruction to terminate the game, if a predetermined number of defeats have been reached, or if a game end condition has been reached, such as when the player has lost all his lives, then the procedure advances to Step S120.

At Step S120, the security code recorded in the magnetic card 16 is cancelled. Here, the process of canceling the security code is executed by overwriting the security code that is stored in a predetermined region of the magnetic card 16 with a predetermined identification code. If the predetermined identification code is "0000," then "0000" is recorded in the predetermined region of the magnetic card 16 after the process of canceling the security code has been executed. After that, a card ejection processing screen 221 as shown in Fig. 12 is displayed, and the procedure advances to Step S121.

At Step S121, the magnetic card 16 is ejected from the card reader/writer 14.

With this fifth embodiment, when the magnetic card 16 has been inserted, the data of a predetermined region are verified and it is determined whether they are equal to a predetermined identification code. If they are not equal to a predetermined identification code, then execution of the game with the game data stored on the magnetic card 16 can be prohibited by ejecting the inserted magnetic card 16, and unauthorized duplication of the game data as well as the keeping of game data that are different from the actual game results can be prevented.

Moreover, a new security code is given to the magnetic card 16 when the game is started, so that it is possible to detect during the game whether the magnetic card 16 has been retrieved and another card has been inserted, and unauthorized duplication of game data can be prevented.

Also in this case, if there is a power outage or the like during the game, a security code different from the predetermined code stays recorded on the magnetic disk 16 placed in the card reader/writer 14, so that the game cannot be executed again using this magnetic card 16. Consequently, it is conceivable to provide a security code cancellation means for the game device administrator, in order to cancel the security code of this magnetic card 16.

The security code cancellation means can be realized as a security code cancellation application that is installed inside the game device such that it can be run only by the game device administrator. In this case, by running the security code cancellation application and executing a security code cancellation process after inserting the magnetic card 16 into the card reader/writer 14, the security code recorded on a predetermined region of the magnetic card 16 can be restored to the predetermined identification code ("0000").

It is also possible to configure the security code cancellation means as an independent device that is supplied only to the game device administrator.

### Sixth Embodiment

It is also possible to monitor, within the game application, at predetermined time intervals whether the magnetic card 16 inserted into the card reader/writer 16 has been retrieved or not, and if it is detected that the magnetic card 16 has been retrieved, then the game may be aborted.

In this case, the game result from playing the game cannot be saved properly, and unauthorized duplication of the game data as well as the keeping of game data that are different from the actual game results can be prevented.

### Working Example

The following is a description of a working example of a specific game to which the first to sixth embodiments can be applied.

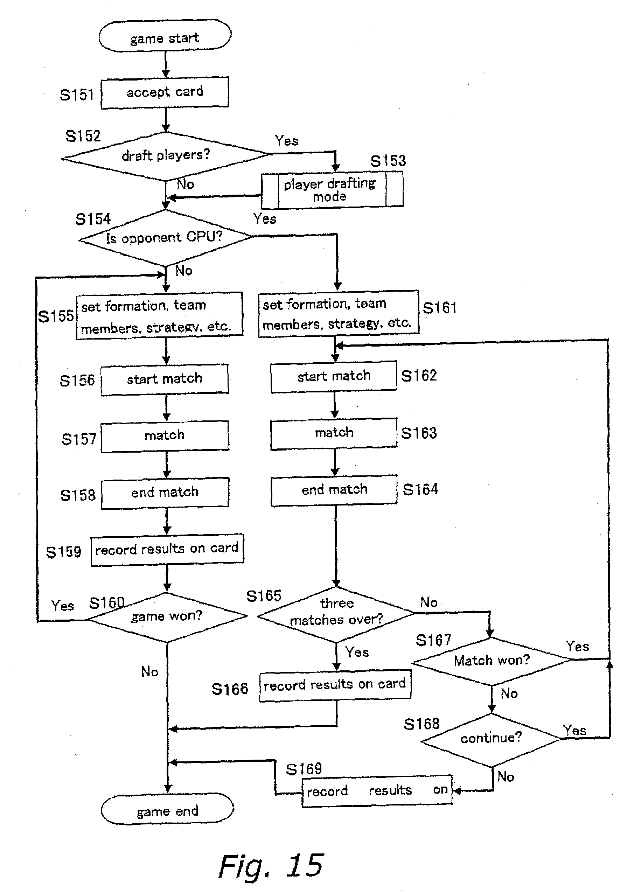

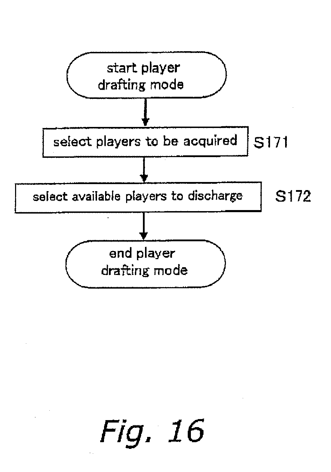

The game described here is a soccer game organized by gathering members, and this soccer team is lead through a tournament. The flow of this game is described with reference to the flowcharts in Fig. 15 and Fig. 16.

At Step S 151, a card insertion acceptance process is executed, in which the magnetic card 16 is inserted. If it is judged that use of the magnetic card 16 has not been terminated properly the previous time, then the magnetic card 16 is ejected, and execution of the game with the game data stored on this magnetic card 16 is prohibited.

At Step S 152, it is judged whether player acquisition is performed or not. Here, a screen is displayed that urges the player to give an instruction whether he wants to acquire players, and if the player gives the instruction to acquire players, then the procedure advances to S 153, whereas if the player gives the instruction not to acquire players, then the procedure advances to Step S 154.

At Step S 153, the procedure jumps to the player drafting mode, and a player drafting procedure is executed. This player drafting procedure is executed for example in accordance with the flowchart shown in Fig. 16.

At Step S171, the data of the players that can be acquired is displayed based on point information in the game data stored on the magnetic card 16, and the player enters his selection instruction.

At Step S 172, the data for the available players to discharge for the players to be acquired that have been selected at Step S 171, and the player enters his selection instruction. After the selection instruction of players to be acquired and to discharge been entered, the player selection mode is terminated, and the procedure returns to the main routine.

At Step S 154, it is determined whether the opponent of the match is a CPU or not. Here, a game mode selection screen is displayed with the options of a match against another player or a match against a CPU, and the player enters his selection instruction. If a match against another player has been selected; then the procedure advances to Step S 155, and if a match against the CPU has been selected, then the procedure advances to Step S161.

At Step S155, the settings for formation, members, match etc. are entered. Here, a game among players is executed, so that each player enters the starting team, settable strategy and so on for the soccer match.

At Step S 156, the match is started based on the settings entered by the players, and at Step S 157 the match is executed. When the match is terminated, a termination process is executed at Step S 158. If penalty data are recorded on the magnetic card 16, then game data based on game results for the case that the match is lost may be stored on the magnetic card 16 before starting the match at Step S156.

At Step S 159, game data in accordance with the match results are stored on the magnetic card 16. At this time, the retrieval prevention flag and the identification code on the magnetic card 16 are confirmed as described above, and if it is judged that there was a retrieval of the magnetic card 16, then the saving of the game data may be made impossible.

At Step S160, it is judged whether the match was won. In this game, if the mode of matches against another players was selected, then the game can be continued until a match is lost. Consequently, if the game is won, then the procedure advances to Step S 155, and the next match may be started.

At Step S161, the settings for formation, members, match etc. are entered. Here, the CPU has been selected as the opponent, so that the player enters the starting team, settable strategy and so on for the soccer match, and the starting team and formation set by the CPU is displayed.

Based on the settings entered by the player and the settings of the CPU, the match starts at Step S162, the match is executed at Step S163, and when the match terminates, a termination process is executed at Step S164. If penalty data are recorded on the magnetic data 16, then game data based on game results for the case that the match is lost may be stored on the magnetic card 16 before starting the match at Step S162.

At Step S165, it is determined whether a predetermined number of matches have been terminated. For example, if for one credit the game can be continued until the CPU has won three times, and it is determined that all three matches have terminated, then, if it is judged that the three matches have been terminated, then the procedure advances to Step S 166, and if not, then it advances to Step S167.

At Step S166, the game data based on the results of the match are stored on the magnetic card 16. Also in this case, the retrieval prevention flag and the identification code of the magnetic card 16 are verified with the method described above, and it is judged whether it is an improper card or not.

At Step S 167, it is judged whether the match was won. If it is judged that the player has won, then the procedure advances to Step S162, and the next match begins. If the player has lost the match, then the procedure advances to Step S168.

At Step S 168, it is determined whether the player continues the game.

Here, a screen urging the player to enter an instruction indicating whether he wants to continue is displayed, and a corresponding instruction input is received from the player. If the player has entered the instruction to continue, then the procedure advances to Step S162, and if the player has entered the instruction not to continue, then the procedure advances to Step S 169.

At Step S169, the game results are recorded on the magnetic card. Also here, the retrieval prevention flag and the identification code of the magnetic card 16 are verified as described above, and it is judged whether there hasn't been an improper retrieval of the card.

### Other Embodiments

If a unique ID is assigned to each magnetic card, then the game device may be configured such that this ID is read and stored in the RAM 112 when placing the magnetic card in the card reader/writer 14, and the game data are saved after confirming the ID of the magnetic card 16.

By combining the retrieval prevention flag, the assigning of an ID and the recording of penalty data in an appropriate manner, improper retrieval of the magnetic card can be prevented.

As mentioned above, the recording medium for storing game data may be a memory card in which an EEPROM or a flash memory is sealed, or it may be a flexible disk or a rewritable MD, CD-RW, MO or other recording medium.

With the embodiments of the present invention, use of recording media that are retrieved during the game is made impossible, and the game data of actually executed games are reliably reflected in the game data stored on the recording media, so that duplication of the game data by improper means as well as use of game data that have been saved by improper means can be prevented.

## Claims

1. A method for saving game data in a game device that executes a game with a game execution unit and stores game data based on a result of that game onto a removable recording medium that is placed in a data input/output unit, the method comprising:
when starting the game, a step of overwriting the game data stored on the recording medium with game data based on a result that is at least as low as the lowest result that is conceivable when executing the game with the game execution unit; and
a step of executing the game with the game execution unit and overwriting the game data stored on the recording medium with game data based on a result of that game.

2. The method for saving game data according to claim 1, further comprising:
executing a step of setting an ID storage region for storing an ID on the recording medium, and, when starting the game, storing in a memory unit the ID stored in the ID storage region of the recording medium; and
executing, when saving the game data a step of reading the ID stored in the recording medium placed in the data input/output unit and verifying whether this ID matches the ID stored in the memory unit; a step of prohibiting storage of the game data to the recording medium if the ID stored on the recording medium does not match the ID stored in the memory unit; a step of allowing storage of the game data on the recording medium if the ID stored on the recording medium matches the ID stored in the memory unit.

3. The method for saving game data according to claim 2, further comprising, when starting the game, executing a step of assigning an ID to the recording medium placed in the data input/output unit and storing this ID on the recording medium.

4. A game device, comprising:
a game execution unit for executing a game;
a data input/output unit with which data can be read/written from/onto a removable recording medium that is placed in the data input/output unit;
a retrieval prevention data storage unit that, when starting the game, overwrites game data stored on the recording medium with game data based on a result that is at least as low as the lowest result that is conceivable when executing the game with the game execution unit; and
a proper data storage unit for executing the game with the game execution unit and overwriting the game data stored on the recording medium with game data based on a result of that game.

5. The game device according to claim 4, wherein an ID storage region for storing an ID is set in the recording medium; the game device further comprising:
a memory unit that can store an ID stored on the recording medium;
an ID storage unit for storing the ID stored on the recording medium in the memory unit when starting the game; and
a data saving restriction unit that, when saving the game data, reads the ID stored on the recording medium placed in the data input/output unit, verifies whether this ID matches the ID stored in the memory unit, prohibits storage of the game data onto the recording medium if the ID stored on the recording medium does not match the ID stored in the memory unit, and allows storage of the game data onto the recording medium if the ID stored on the recording medium matches the ID stored in the memory unit.

6. The game device according to claim 5, further comprising:
an ID assignment unit for assigning an ID to the recording medium placed in the data input/output unit when starting the game, and storing this ID on the recording medium.
